# FASCICULE DE BREVET EUROPEEN

(11) **EP 3 674 590 B1**
(45) Date de publication et mention de la délivrance du brevet: **01.02.2023**
(21) Numéro de dépôt: 19213990.5
(22) Date de dépôt: 05.12.2019
(51) Int. Cl.: F16L 1/20, F16L 3/233, F16B 2/08, F16B 7/04

(54) **DISPOSITIF POUR ARRIMER UN ELEMENT SUR UN CONDUIT, SYSTEME D'ARRIMAGE, INSTALLATION ET PROCEDE DE MISE EN OEUVRE**
VORRICHTUNG ZUM BEFESTIGEN EINES ELEMENTS AUF EINER LEITUNG, BEFESTIGUNGSSYSTEM, INSTALLATION UND UMSETZUNGSVERFAHREN
DEVICE FOR SECURING A MEMBER TO A PIPE, SYSTEM FOR SECURING, INSTALLATION AND METHOD FOR IMPLEMENTING SAME

(30) Priorité: 21.12.2018 FR 1873856
(43) Date de publication de la demande: 01.07.2020
(73) Titulaire: Financiere de Beaumont- FDB, 26100 Romans (FR)
(72) Inventeur: COURBIS, Hervé Guy Claude, 26600 Beaumont-Monteux (FR)
(74) Mandataire: Cabinet Laurent & Charras

(56) Documents cités:
- EP-A1- 1 965 116
- DE-A1-102004 053 863
- FR-A1- 3 059 059
- US-A1- 2004 237 264

## Description

La présente invention concerne un dispositif de fixation d'une sangle, pour arrimer un élément sur un conduit. L'invention concerne également un système d'arrimage comprenant un tel dispositif et une sangle ; une installation comprenant un tel système ; et un procédé de mise en oeuvre d'un tel système.

Le domaine de l'invention est celui des conduits, tels que les pipelines sousmarins pour le transport d'hydrocarbures.

Dans ce domaine, il est connu de fixer différents éléments le long des conduits, qui peuvent s'étendre sur plusieurs centaines de kilomètres, sur terre, sous terre et/ou sous l'eau. A titre d'exemples non limitatifs, ces éléments peuvent être des câbles électriques, des capteurs, ou des supports pour la fixation de câbles. Concernant ce dernier exemple, il est en effet préférable d'interposer un élément support entre le conduit et les câbles.

En pratique, l'élément arrimé sur le conduit doit rester en place pendant toute la durée de vie de ce conduit, par exemple 25 ans. L'élément immergé en profondeur doit résister aux pressions, aux variations de températures, aux courants, à la faune et à la flore marines, etc.

De plus, il est remarquable que le conduit immergé se rétracte progressivement au cours du temps sous l'effet des contraintes auxquelles il est soumis, c'est-à-dire que son diamètre diminue progressivement. Si l'élément est arrimé sur le conduit à l'aide d'une sangle sous tension, alors la tension dans la sangle se relâche lorsque le conduit se rétracte, de sorte que l'élément n'est plus maintenu en place.

Le document FR 2 965 252 décrit un exemple de système d'arrimage, conçu pour fixer une charge sur un véhicule de transport. Ce système comprend une sangle et un dispositif compensateur de perte de tension. Cependant, ce système présente une construction complexe et n'est pas adapté à l'arrimage d'un élément sur un conduit immergé.

Le document FR 3 059 059 décrit un autre exemple de système d'arrimage, développé par la Demanderesse. Ce système comprend un dispositif constitué d'un organe compensateur en matériau élastique, et de deux brins aptes à former une sangle autour du tuyau. Ce système comprend également des moyens de jonction des deux brins. En fonction de la longueur de l'organe et des brins, chaque dispositif est adapté à un périmètre de conduit particulier.

Le but de la présente invention est de proposer un dispositif remédiant aux inconvénients ci-dessus.

A cet effet, l'invention a pour objet un dispositif pour l'arrimage d'un élément sur un conduit, selon la revendication 1.

Le dispositif permet de compenser la perte de tension dans la sangle du fait de la rétractation du conduit, et maintenir l'élément arrimé sur le conduit. L'organe compensateur permet d'apporter de la souplesse et de l'élasticité au système d'arrimage constitué du dispositif et de la sangle, en comparaison avec un système constitué seulement d'une sangle.

Les boucles de serrage permettent de recevoir et tendre la sangle de manière simple et pratique. La longueur de la sangle peut facilement être ajustée en fonction du périmètre du conduit. Ainsi, le dispositif peut être mis en oeuvre pour toutes dimensions de conduits, avec une grande polyvalence.

L'invention facilite l'arrimage d'un ou plusieurs éléments le long d'un conduit, sur une longueur importante, simplement avec un ensemble de dispositifs et un rouleau de sangle.

Selon d'autres caractéristiques avantageuses de l'invention
- Les premières extrémités des brins comportent des évidements recevant de la matière de l'organe compensateur lors du surmoulage.
- La boucle de serrage et le brin associé constituent une même pièce.
- Le dispositif est uniquement constitué par l'organe compensateur, les deux boucles de serrage prévue pour recevoir la sangle, et les deux brins.
- Suivant une direction longitudinale du dispositif au repos, chacun des deux brins est plus court que l'organe compensateur.

L'invention a également pour objet un système d'arrimage, comprenant : un dispositif tel que mentionné ci-dessus, et une sangle prévue pour coopérer avec le dispositif pour arrimer un élément à un conduit.

De préférence, le système comprend un ensemble de dispositifs et un rouleau de sangle. L'utilisateur peut ainsi arrimer facilement un ou plusieurs éléments le long du conduit, sur une longueur importante.

L'invention a également pour objet une installation, comprenant : au moins un système d'arrimage tel que mentionné ci-dessus, au moins un élément prévu pour être arrimé à un conduit en mettant en oeuvre le système, au moins une pièce fixée à l'élément, et le conduit supportant le système, l'élément et la pièce.

L'invention a également pour objet un procédé de mise en oeuvre d'un système d'arrimage tel que mentionné ci-dessus. Le procédé est caractérisé en ce qu'il comprend les étapes successives suivantes :
a) assembler le système autour du conduit, en disposant les extrémités libres de la sangle dans les boucles de serrage du dispositif ;
b) mettre sous tension le dispositif et la sangle autour du conduit, étirant ainsi l'organe compensateur ; puis
c) lorsque le conduit se rétracte progressivement au cours du temps, l'organe compensateur se rétracte également, de sorte que le dispositif et la sangle sont maintenus en tension autour du conduit.

Selon l'invention, le conduit est destiné à être immergé. Le système d'arrimage est submersible. L'organe compensateur est rétractable progressivement au cours du temps pour maintenir le dispositif et la sangle en tension lorsque le conduit se rétracte en immersion.

L'invention sera mieux comprise à la lecture de la description qui va suivre, donnée uniquement à titre d'exemple non limitatif et faite en référence aux dessins annexés sur lesquels :
- La figure 1 est une vue en perspective d'un système d'arrimage conforme à l'invention, comprenant un dispositif de fixation et une sangle.
- La figure 2 est une vue de face du système, selon la flèche Il à la figure 1.
- La figure 3 est une vue de dessus du système, selon la flèche III à la figure 1.
- La figure 4 est une vue à plus grande échelle du détail IV de la figure 2.
- La figure 5 est une vue à plus grande échelle du détail V de la figure 3.
- La figure 6 est une vue de face d'une installation conforme à l'invention, comprenant le dispositif de fixation et la sangle constituant le système d'arrimage, un conduit cylindrique, un élément support arrimé au conduit, et un câble fixé à l'élément support.
- La figure 7 est une vue de côté selon la flèche VII de la figure 6.
- La figure 8 est une vue analogue à la figure 6, montrant le conduit et le dispositif qui se sont rétractés après plusieurs années de service.
- La figure 9 est une vue de côté selon la flèche IX de la figure 8.

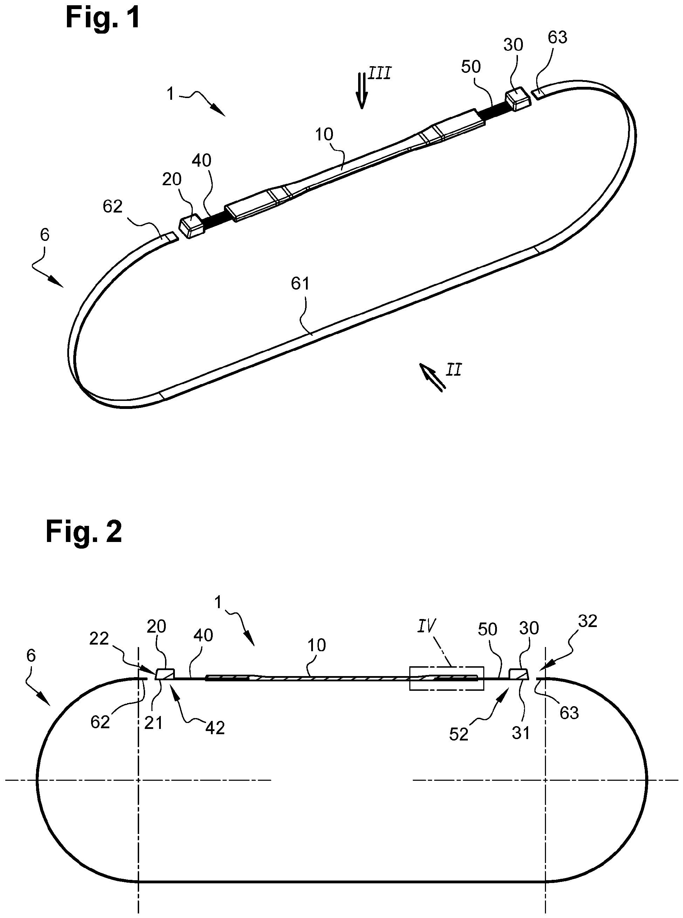

Sur les figures 1 à 9 est représenté un dispositif de fixation 1 conforme à l'invention. Le dispositif 1 comprend un organe compensateur 10, deux boucles de serrage 20 et 30, ainsi que deux brins 40 et 50 reliant l'organe 10 aux boucles 20 et 30.

Le dispositif 1 est conçu pour coopérer avec une sangle 6, afin d'arrimer un élément 2 à un conduit 4. La sangle 6 est allongée entre deux extrémités libres 62 et 63 reliées par une partie courante 61. Le dispositif 1 permet de fixer la sangle 6 autour du conduit 4.

Sur les figures 1 à 5, le dispositif 1 est montré au repos, sans contraintes mécaniques exercées sur ses éléments constitutifs.

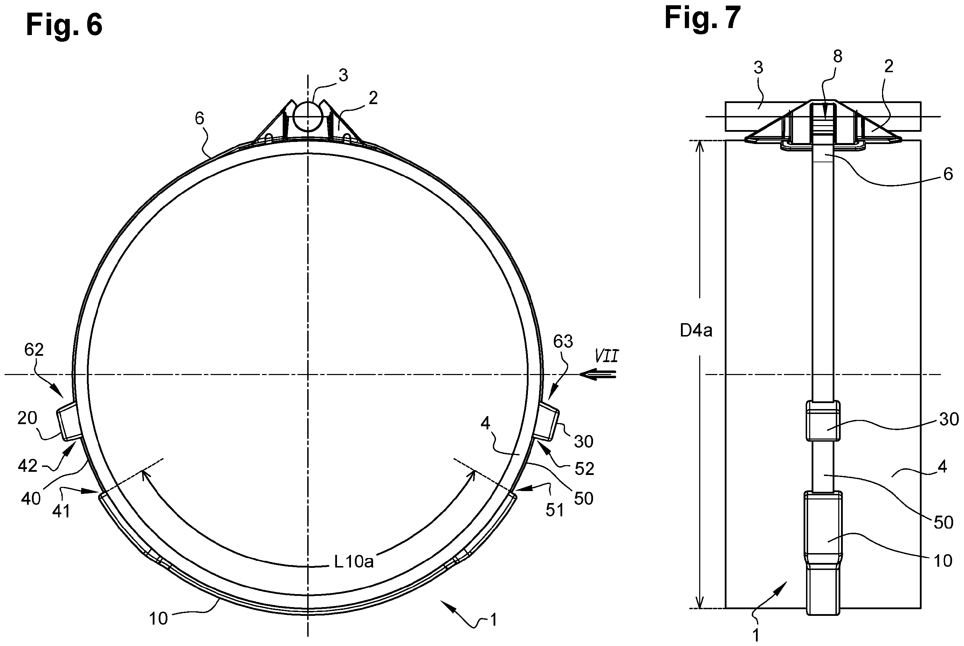

Sur les figures 6 à 9, le dispositif 1 et la sangle 6 sont montrés en service, dans le cadre de l'arrimage d'un élément support 2 de câble 3 sur un conduit 4.

L'élément 2 est monobloc, formé d'une seule pièce en matière plastique. L'élément 2 est arrimé sur le conduit 4 grâce au dispositif 1 et à la sangle 6, notamment grâce au passage de la sangle 6 à travers une ouverture 8 ménagée à cet effet dans l'élément 2.

En alternative, l'élément 2 peut être de tout autre type adapté à l'application visée. Selon une variante, l'élément 2 peut supporter plusieurs câbles 3. Au lieu d'un câble 3, l'élément 2 peut recevoir tout autre type de pièce, généralement allongée, telle qu'une gaine ou un tuyau.

Le câble 3 peut être un câble électrique ou de transfert de données numériques.

Le conduit 4 est un tube de métal, de préférence recouvert d'une couche d'isolant, par exemple en polypropylène.

L'organe 10 est monobloc, formé d'une seule pièce en matériau plastique. De préférence, l'organe 10 est en élastomère de polyuréthane, tel que connu sous la marque COURBHANE du Demandeur.

L'organe 10 comprend une portion médiane 11, deux portions d'extrémités 12 et 13, et deux portions intermédiaires 14 et 15 formés entre la portion médiane 11 et les portions d'extrémités 12 et 13, respectivement. L'organe 10 comporte une surface inférieure 16 qui s'étend sur toute sa longueur et est destinée à venir en appui contre la surface externe du conduit 4.

De préférence, l'organe 10 est symétrique par rapport à un plan central transversal. Ainsi, la portion 12 présente des dimensions identiques à la portion 13, et la portion 14 présente des dimensions identiques à la portion 15.

Suivant une direction longitudinale, la portion 11 est plus allongée que les portions 12 et 13, qui sont elles-mêmes plus allongées que les portions 14 et 15. En hauteur et en largeur, la portion 11 est moins haute et moins large que les portions 12 et 13. Ainsi, la portion 11 présente une section transversale plus petite que les portions 12 et 13. Les portions 14 et 15 présentent des hauteur et largeurs variables. Toutes les sections transversales des portions 11-15 sont parallélépipédiques.

Du fait de ses dimensions inférieures et donc de sa résistance mécanique inférieure, c'est principalement la portion 11 qui est étirée lorsque l'organe 10 est soumis à des contraintes de traction sur ses deux portions d'extrémités 12 et 13.

Les boucles de serrage 20 et 30 sont en matériau rigide, non élastique dans les conditions normales de température et de pression (CNTP). Les boucles 20 et 30 peuvent être en métal ou en matière plastique, par exemple en matière thermoplastique.

La boucle 20 comprend une base 21 solidaire du brin 40 et une ouverture 22 prévue pour recevoir l'extrémité 62 de la sangle 60. La boucle 30 comprend une base 31 solidaire du brin 50 et une ouverture 32 prévue pour recevoir l'extrémité 63 de la sangle 60.

Chaque boucle 20 et 30 est conçue pour autoriser une translation de la sangle 60 à travers l'ouverture 22 ou 32 en direction de l'organe 10, et pour empêcher une translation de la sangle 60 dans une direction opposée à l'organe 10. La sangle 60 est ainsi serrée dans les boucles 20 et 30, qui l'empêchent de se détendre.

Chaque brin 40 et 50 est en matériau rigide, non élastique dans les conditions normales de température et de pression (CNTP). Le matériau des brins 40 et 50 est choisi selon un compromis entre résistance et souplesse. Les brins 40 et 50 peuvent être en matériau plastique, métallique, composite, tissu ou toute autre matière adaptée à l'application visée.

Selon un mode de réalisation préféré, la boucle 20 et le brin 40 constituent une unique pièce, et de même la boucle 30 et le brin 50 constituent une unique pièce. Par exemple, ces pièces sont en matière thermoplastique.

Le brin 40 s'étend entre deux extrémités 41 et 42 reliées par une partie courante 43. De même, le brin 50 s'étend entre deux extrémités 51 et 52 reliées par une partie courante 53. Les extrémités 41 et 51 sont solidaires de l'organe 10, plus précisément des portions 12 et 13, respectivement. Les extrémités 42 et 52 sont solidaires des boucles 20 et 30, plus précisément des base 21 et 22, respectivement.

Les extrémités 41 et 51 sont solidarisées à l'organe 10 par surmoulage. Autrement dit, l'organe 10 est surmoulé sur les extrémités 41 et 51 des brins 40 et 50.

Egalement de préférence, les extrémités 42 et 52 sont venues de matière avec les bases 21 et 31 des boucles 20 et 30, comme mentionné plus haut. En alternative, les boucles 20 et 30 peuvent être solidarisées aux brins 40 et 50 par tout autre moyen, par exemple surmoulées sur les extrémités 42 et 52.

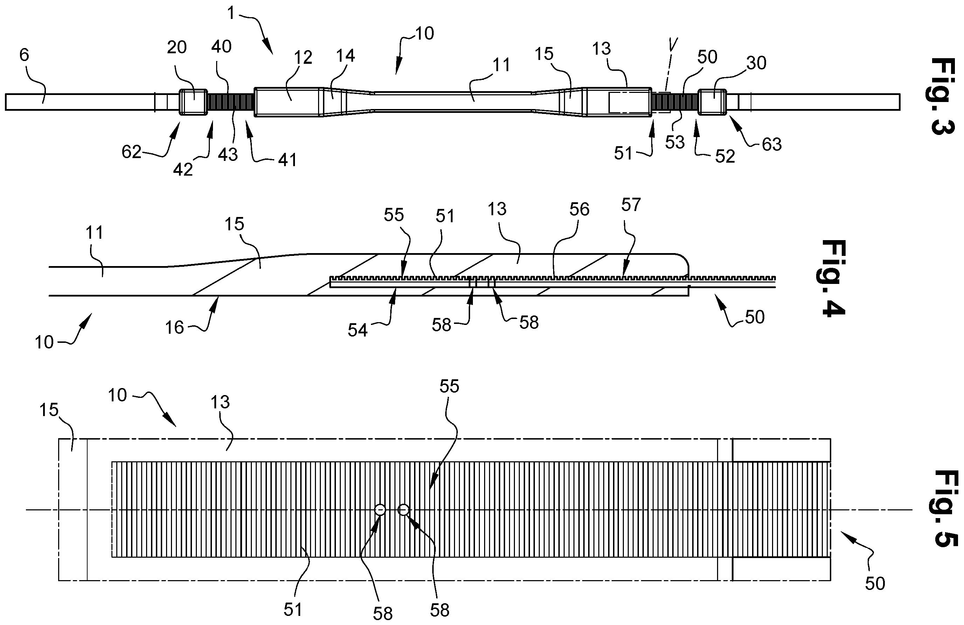

Comme montré aux figures 4 et 5 pour le brin 50, l'extrémité 51 comporte une face lisse 54 et une face crénelée 55. La face 55 comporte un relief constitué par une alternance de créneaux 56 en saillie et d'évidements 57 en creux entre les créneaux 56. Les évidements 57 reçoivent la matière de l'organe 10 lors du surmoulage, ce qui permet de créer une liaison rigide entre l'organe 10 et le brin 20.

En alternative ou en complément, l'extrémité 51 peut comporter d'autres moyens de solidarisation avec l'organe 10. Par exemple, l'extrémité 51 peut être munie d'un ou plusieurs orifices 58 traversant entre les faces 56 et 57, lesquelles peuvent être lisses ou en relief. La matière de l'organe 10 est alors reçue dans ces orifices 58 lors du surmoulage. D'autres moyens de solidarisation peuvent être mis en oeuvre sans sortir du cadre de l'invention.

Les explications données ci-dessus pour l'extrémité 51 sont également valable pour l'extrémité 41.

Les figures 6 et 7 montrent l'arrimage de l'élément 2 au conduit 4, qui présente initialement un diamètre D4a. La sangle 6 est d'abord passée à travers l'ouverture 8 formée dans l'élément 2. Le dispositif 1 et la sangle 6 sont positionnés autour du conduit 4, puis les extrémités 62 et 63 de la sangle 6 sont logées dans les boucles 20 et 30. Le dispositif 1 et la sangle 6 sont ensuite mis sous tension autour du conduit 4, en resserrant la sangle 6 dans les boucles 20 et 30. L'élément 2 est ainsi plaqué par la sangle 6 contre le conduit 4. Les contraintes de traction exercées par les brins 40 et 50 sur les portions 12 et 13 provoquent l'allongement de l'organe 10. A ce stade, l'organe 10 présente une longueur L10a supérieure à sa longueur L10 au repos.

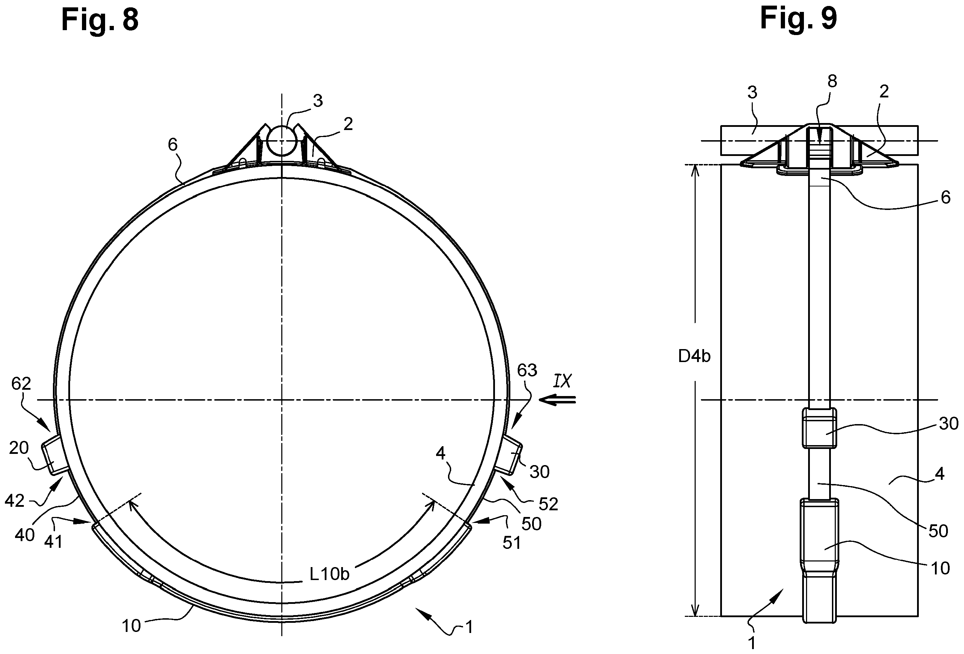

Les figures 8 et 9 montrent la rétractation du conduit 4 au cours du temps. Son diamètre D4a diminue jusqu'à un diamètre D4b. A titre d'exemple, après 25 ans en immersion, le diamètre D4b peut atteindre 90% du diamètre D4a. Du fait de ses propriétés d'élasticité, l'organe 10 se rétracte progressivement en accompagnant la rétractation du conduit 4. Ainsi le dispositif 1 et la sangle 6 restent maintenus en tension, et l'élément 2 reste plaqué contre le conduit 4. L'organe 10 présente alors une longueur L10b inférieure à sa longueur initiale L10a, mais supérieure à sa longueur L10 au repos.

Ainsi, l'invention permet de compenser la perte de tension dans la sangle 6 du fait de la rétractation du conduit 4, et maintenir l'élément 2 arrimé sur le conduit 4. L'organe compensateur 10 permet d'apporter de la souplesse et de l'élasticité au système d'arrimage 1+6, en comparaison avec une système d'arrimage constitué seulement d'une sangle rigide.

Par ailleurs, le dispositif 1, le système 1+6 et l'installation 1+2+3+4+6 peuvent être conformés différemment des figures 1 à 9 sans sortir du cadre de l'invention, telle que définie par les revendications. En outre, les caractéristiques techniques des différentes variantes mentionnées ci-dessus peuvent être, en totalité ou pour certaines d'entre elles, combinées entre elles. Ainsi, le dispositif 1 peut être adapté en termes de coût, de fonctionnalités et de performance.

## Revendications

1. Dispositif (1) pour arrimer un élément (2) sur un conduit (4) immergé du type pipeline sous-marin pour le transport d'hydrocarbures, le dispositif (1) comprenant :
- un organe compensateur (10) en matériau élastique, extensible lorsque le dispositif (1) est mis sous tension ;
- deux brins (40, 50) réalisés en matériau moins élastique que l'organe compensateur (10), et s'étendant chacun entre une première extrémité (41, 51) surmoulée par l'organe compensateur (10) et une deuxième extrémité (42, 52) ;
**caractérisé en ce qu'**il comprend deux boucles de serrage (20, 30), chacune directement solidaire d'une des deuxièmes extrémités (42, 52) des brins (40, 50) et conçues pour recevoir chacune une extrémité libre (62, 63) d'une sangle (6) utilisée pour mettre en tension le dispositif (1) autour du conduit (4), l'organe compensateur (10) étant rétractable progressivement au cours du temps pour maintenir le dispositif (1) et la sangle (6) en tension lorsque le conduit (4) se rétracte.

2. Dispositif (1) selon la revendication 1,
**caractérisé en ce que** les brins (40 ; 50) comportent des évidements (57, 58) recevant de la matière de l'organe compensateur (10) lors du surmoulage.

3. Dispositif (1) selon l'une des revendications 1 ou 2,
**caractérisé en ce que** la boucle de serrage (20, 30) et le brin (40, 50) associé constituent une même pièce.

4. Dispositif (1) selon l'une des revendications 1 à 3,
**caractérisé en ce qu'**il est uniquement constitué par l'organe compensateur (10), les deux boucles de serrage (20, 30) prévue pour recevoir la sangle (6), et les deux brins (40, 50).

5. Dispositif (1) selon l'une des revendications 1 à 4,
**caractérisé en ce que** suivant une direction longitudinale du dispositif (1) au repos, chacun des deux brins (40, 50) est plus court que l'organe compensateur (10).

6. Système d'arrimage (1, 6), comprenant au moins :
- un dispositif (1) selon l'une des revendications 1 à 5, et
- une sangle (6) prévue pour coopérer avec le dispositif (1) pour arrimer un élément (2) à un conduit (4).

7. Système d'arrimage (1, 6) selon la revendication 6, comprenant :
- un ensemble de dispositifs (1) selon l'une des revendications 1 à 5, et
- un rouleau de sangle (6).

8. Installation (1, 2, 3, 4, 6), comprenant :
- au moins un système d'arrimage (1, 6) selon l'une des revendications 6 ou 7,
- au moins un élément (2) prévu pour être arrimé à un conduit (4) en mettant en oeuvre le système (1, 6),
- au moins une pièce (3) fixée à l'élément (2), et
- un conduit (4) supportant le système (1, 6), l'élément (2) et la pièce (3).

9. Procédé de mise en œuvre d'un système d'arrimage (1, 6) selon l'une des revendications 6 ou 7, **caractérisé en ce que** le procédé comprend les étapes successives suivantes :
a) assembler le système (1, 6) autour du conduit (4), en disposant les extrémités libres (62, 63) de la sangle (6) dans les boucles de serrage (20, 30) du dispositif (1) ;
b) mettre sous tension le dispositif (1) et la sangle (6) autour du conduit (4), étirant ainsi l'organe compensateur (10) ; puis
c) lorsque le conduit (4) se rétracte progressivement au cours du temps, l'organe compensateur (10) se rétracte également, de sorte que le dispositif (1) et la sangle (6) sont maintenus en tension autour du conduit (4).

## Patentansprüche

1. Vorrichtung (1) zum Festzurren eines Elements (2) an einer eingetauchten Leitung (4) des Typs Untersee-Pipeline zum Transport von Kohlenwasserstoffen, wobei die Vorrichtung (1) Folgendes umfasst:
- ein Ausgleichsorgan (10) aus einem elastischen Material, das sich ausdehnen kann, wenn die Vorrichtung (1) gespannt wird;
- zwei Stränge (40, 50), die aus einem Material hergestellt sind, das weniger elastisch als das Ausgleichsorgan (10) ist, wobei sie sich jeweils zwischen einem ersten Ende (41, 51), über welches das Ausgleichsorgan (10) gestülpt ist, und einem zweiten Ende (42, 52) erstrecken;
**dadurch gekennzeichnet, dass** sie zwei Festziehschlaufen (20, 30) umfasst, die jeweils unmittelbar mit einem der beiden Enden (42, 52) der Stränge (40, 50) fest verbunden sind, wobei sie dafür ausgelegt sind, jeweils ein freies Ende (62, 63) eines Gurts (6) aufzunehmen, der dazu verwendet wird, die Vorrichtung (1) rundum die Leitung (4) zu spannen, wobei das Ausgleichsorgan (10) im Laufe der Zeit fortschreitend zurückgezogen werden kann, damit die Vorrichtung (1) und der Gurt (6) gespannt bleiben, wenn die Leitung (4) sich zurückzieht.

2. Vorrichtung (1) nach Anspruch 1, **dadurch gekennzeichnet, dass** die Stränge (40; 50) Aussparungen (57, 58) aufweisen, die beim Überstülpen des Ausgleichsorgans (10) Material desselben aufnehmen.

3. Vorrichtung (1) nach einem der Ansprüche 1 oder 2, **dadurch gekennzeichnet, dass** die Festziehschlaufe (20, 30) und der dazugehörige Strang (40, 50) einstückig ausgeführt sind.

4. Vorrichtung (1) nach einem der Ansprüche 1 bis 3, **dadurch gekennzeichnet, dass** es ausschließlich aus dem Ausgleichsorgan (10), den beiden Festziehschlaufen (20, 30), welche für ausgelegt sind, den Gurt (6) aufzunehmen, und den beiden Strängen (40, 50) besteht.

5. Vorrichtung (1) nach einem der Ansprüche 1 bis 4, **dadurch gekennzeichnet, dass** jeder der beiden Stränge (40, 50) gemäß einer Längsrichtung, welche die Vorrichtung (1) im Ruhezustand einnimmt, kürzer als das Ausgleichsorgan (10) ist.

6. Festzurrsystem (1, 6), das zumindest Folgendes umfasst:
- eine Vorrichtung (1) nach einem der Ansprüche 1 bis 5,
- einen Gurt (6), der dafür ausgelegt ist, mit der Vorrichtung (1) zusammenzuwirken, um ein Element (2) an einer Leitung (4) festzuzurren.

7. Festzurrsystem (1, 6) nach Anspruch 6, das Folgendes umfasst;
- eine Gesamtheit von Vorrichtungen (1) nach einem der Ansprüche 1 bis 5, und
- eine Gurtrolle (6).

8. Anlage (1, 2, 3, 4, 6), die Folgendes umfasst:
- mindestens ein Festzurrsystem (1, 6) nach einem der Ansprüche 6 oder 7,
- mindestens ein Element (2), das dafür ausgelegt ist, unter Einsatz des Systems (1, 6) an einer Leitung (4) festgezurrt zu werden,
- mindestens ein Stück (3), das an dem Element (2) befestigt ist, und
- eine Leitung (4), auf welcher das System (1, 6), das Element (2) und das Stück (3) aufliegen.

9. Verfahren zum Einsetzen eines Festzurrsystems (1, 6) nach einem der Ansprüche 6 oder 7,
**dadurch gekennzeichnet, dass** das Verfahren nacheinander die folgenden Schritte umfasst:
a) Zusammensetzen des Systems (1, 6) rundum die Leitung (4), indem die freien Enden (62, 63) des Gurts (6) in den Festziehschlaufen (20, 30) der Vorrichtung (1) angeordnet werden;
b) Spannen der Vorrichtung (1) und des Gurts (6) rundum die Leitung (4), wobei das Ausgleichsorgan (10) auf diese Weise gestreckt wird; woraufhin,
c) wenn die Leitung (4) sich im Laufe der Zeit fortschreitend zurückzieht, sich das Ausgleichsorgan (10) ebenfalls zurückzieht, sodass die Vorrichtung (1) und der Gurt (1) rundum die Leitung (4) gespannt bleiben.

## Claims

1. Device (1) for securing an element (2) on a submerged pipe (4) as an underwater pipeline for the transport of hydrocarbons, the device (1) comprising:
- a compensating member (10) made of an elastic material, extensible when the device (1) is tensioned;
- two strands (40, 50) made of a material less elastic than the compensating member (10), each extending between a first end (41, 51) overmold by the compensating member (10) and a second end (42, 52),
**characterized in that** it comprises two clamping buckles (20, 30), each directly integral with one of the second ends (42, 52) of the strands (40, 50) and designed each receive a free end (62, 63) of a strap (6) used to tension the device (1) around the pipe (4), the compensating member (10) being progressively retractable over time to maintain the device (1) and the strap (6) in tension when the pipe (4) retracts.

2. The device (1) according to one of Claims 1, **characterized in that** the strands (40; 50) have recesses (57, 58) receiving material from the compensating member (10) during overmolding.

3. The device (1) according to one of Claims 1 to 2, **characterized in that** the clamping buckle (20, 30) and the associated strand (40, 50) form a single piece.

4. The device (1) according to one of Claims 1 to 3, **characterized in that** it solely comprises the compensating member (10), the two clamping buckles (20, 30) designed to receive the strap (6), and the two strands (40, 50).

5. The device (1) according to one of Claims 1 to 4, **characterized in that** in a longitudinal direction of the device (1) at rest, each of the two strands (40, 50) is shorter than the compensating member (10).

6. A securing system (1, 6), comprising at least:
- a device (1) according to one of Claims 1 to 5, and
- a strap (6) designed to cooperate with the device (1) for securing an element (2) to a pipe (4).

7. A securing system (1, 6) according to Claim 6, comprising:
- a set of devices (1) according to any of Claims 1 to 5, and
- one strap roll (6).

8. Installation (1, 2, 3, 4, 6) comprising:
- at least one securing system (1, 6) according to one of Claims 6 or 7,
- at least one element (2) designed to be secured to a pipe (4) by implementing the system (1, 6),
- at least one piece (3) fastened to the element (2), and
- a pipe (4) supporting the system (1, 6), the element (2) and the piece (3).

9. A method of implementing a securing system (1, 6) according to one of Claims 6 or 7, **characterized in that** the method comprises the following successive steps:
a) assembling the system (1, 6) around the pipe (4), by placing the free ends (62, 63) of the strap (6) in the clamping buckles (20, 30) of the device (1);
b) tightening the device (1) and the strap (6) around the pipe (4), thereby stretching the compensating member (10); then
c) when the pipe (4) gradually shrinks over time, the compensating member (10) also shrinks, so that the device (1) and the strap (6) are held in tension around the pipe (4).
